# EUROPEAN PATENT APPLICATION

(11) **EP 4 787 467 A1**
(43) Date of publication of application: **05.08.2026**
(21) Application number: 24870056.9
(22) Date of filing: 26.07.2024
(51) Int. Cl.: H01M 4/36, H01M 4/587, H01M 4/38

(54) **THREE-DIMENSIONAL POROUS MATERIAL, NEGATIVE ELECTRODE COMPOSITE MATERIAL AND USE**

(30) Priority: 27.09.2023 CN 202311282907
(71) Applicant: HUAWEI TECHNOLOGIES CO., LTD., Shenzhen 518129 (CN); Liyang Zichen New Materials Technology Co., Ltd, Changzhou, Jiangsu 213300 (CN)
(72) Inventor: LAN, Danni, Shenzhen, Guangdong 518129 (CN); YANG, Yangyuchen, Shenzhen, Guangdong 518129 (CN); MA, Qiang, Shenzhen, Guangdong 518129 (CN); WANG, Bo, Shenzhen, Guangdong 518129 (CN)
(74) Representative: Thun, Clemens
(86) International application number: PCT/CN2024/107703
(87) International publication number: WO 2025/066502

(57) **Abstract**

This application provides a three-dimensional porous material, a negative electrode composite material, and an application. The three-dimensional porous material has specially designed opening diameter distribution, a volume proportion of a hole whose opening diameter is less than or equal to 2 nm is greater than or equal to 70%, and a volume proportion of a hole whose opening diameter is 1 nm to 2 nm is greater than or equal to 50%. A proportion of an effective deposition hole in the three-dimensional porous material is high, and concentration of the opening diameter distribution is high. This can achieve good threshold limiting effect, to provide a negative electrode composite material having both a high specific capacity and high structural stability.

## Description

This application claims priority to Chinese Patent Application No. 202311282907.7, filed with the China National Intellectual Property Administration on September 27, 2023 and entitled "THREE-DIMENSIONAL POROUS MATERIAL, NEGATIVE ELECTRODE COMPOSITE MATERIAL, AND APPLICATION", which is incorporated herein by reference in its entirety.

### TECHNICAL FIELD

This application relates to the field of battery technologies, and in particular, to a three-dimensional porous material, a negative electrode composite material, and an application.

### BACKGROUND

Currently, a carbon material (for example, graphite) is mostly used as a negative electrode material of a secondary battery in the industry. However, a low specific capacity of the carbon material severely restricts energy density of the secondary battery. To meet a market pursuit for high-energy-density batteries, high-performance electrode materials (for example, silicon negative electrode materials) with a high specific capacity are gradually attracting attention. However, the high-performance electrode material usually has an extremely high volume change rate before and after active ion intercalation/deintercalation, which severely affects performance of the battery and shortens a cycle life of the battery.

To resolve the foregoing problem, the high-performance electrode material is usually deposited in a three-dimensional porous material in the industry to limit expansion of the high-performance electrode material. However, in the existing three-dimensional porous material, the high-performance electrode material cannot be well deposited due to a wide aperture distribution, resulting in poor structural uniformity of a finally prepared negative electrode material. The performance of the battery is still affected.

### SUMMARY

In view of this, embodiments of this application provide a three-dimensional porous material, a negative electrode composite material, and an application. The three-dimensional porous material has specially designed opening diameter distribution of holes, a proportion of an effective deposition hole of the three-dimensional porous material is high, and concentration of the opening diameter distribution of the holes is high. This can achieve better threshold limiting effect for a deposited substance, to provide a negative electrode material having both a high specific capacity and high structural stability.

A first aspect of embodiments of this application provides a three-dimensional porous material, including a plurality of holes. A total hole volume of the three-dimensional porous material is used as a reference, a volume proportion of a hole whose opening diameter is less than or equal to 2 nm is greater than or equal to 70%, and a volume proportion of a hole whose opening diameter ranges from 1 nm to 2 nm is greater than or equal to 50%.

In the three-dimensional porous material, concentration of opening diameter distribution of the holes whose opening diameter is less than or equal to 2 nm is high, and the volume proportion of the hole whose opening diameter ranges from 1 nm to 2 nm is greater than or equal to 50%. In this way, opening diameter distribution in the three-dimensional porous material is narrow, and a proportion of an effective deposition hole is large. This can improve adsorption and deposition efficiency of active material particles (a particle, for example, silane, that may be used to form a positive electrode active material or a negative electrode active material) in the three-dimensional porous material and deposition utilization of the hole. In addition, good limiting effect on a particle size of a deposited and generated active material is achieved, which is conducive to formation of extremely small nanoparticles. In addition, the three-dimensional porous material has good uniformity, and therefore can improve concentration and uniformity of particle sizes of the deposited and generated active material. Therefore, when a deposited substance is a material like a silicon-containing substance or a phosphorus-containing substance, volume expansion of the deposited substance in a battery charge/discharge cycle process and non-uniform mechanical stress distribution caused by the volume expansion of the deposited substance can be further alleviated.

In some implementations of this application, the total hole volume of the three-dimensional porous material is used as the reference, and the volume proportion of the hole whose opening diameter is less than or equal to 2 nm is greater than or equal to 85%. This can further improve uniformity of the three-dimensional porous material. When the active material is deposited in the three-dimensional porous material, an average particle size of the deposited and generated active material can be further limited and reduced.

In some implementations of this application, the total hole volume of the three-dimensional porous material is used as the reference, and a volume proportion of a hole whose opening diameter is less than 1 nm is less than or equal to 40%. This can ensure that a proportion of effective deposition in the three-dimensional porous material is high. In some specific embodiments, the total hole volume of the three-dimensional porous material is used as the reference, and the volume proportion of the hole whose opening diameter is less than 1 nm is less than or equal to 38%. In this way, when the active material is deposited in the three-dimensional porous material, a mass proportion of the deposited and generated active material in a final composite material can be increased.

In some implementations of this application, a volume proportion of a hole whose opening diameter is greater than 5 nm is less than 1%. When the active material is deposited in the three-dimensional porous material, the average particle size of the deposited and generated active material can be further limited and reduced.

In some implementations of this application, the total hole volume of the three-dimensional porous material is greater than 0.5 cm³/g. In a case of the opening diameter distribution in the three-dimensional porous material, the total hole volume is controlled to be greater than 0.5 cm³/g, so that the three-dimensional porous material can have an appropriate quantity of effective deposition holes, to provide a composite material with better comprehensive performance.

In some implementations of this application, a material of the three-dimensional porous material includes at least one of conductive carbon, conductive ceramic, or metal.

A second aspect of embodiments of this application provides a negative electrode composite material, including the three-dimensional porous material provided in the first aspect of this application and a plurality of nanoparticles located in the hole. A material of the nanoparticle includes at least one of a silicon-containing material, a phosphorus-containing material, or a tin-containing material.

Based on a special structure design of the three-dimensional porous material, an average particle size of the nanoparticles is small. This can effectively reduce an expansion rate of the negative electrode composite material in a charge/discharge cycle process. In addition, the plurality of nanoparticles in the negative electrode composite material are highly concentrated within a small particle size range (the negative electrode composite material has good uniformity). This can improve uniformity of internal mechanical stress distribution of the negative electrode composite material in a battery cycle process, reduce a risk of rupture of the negative electrode composite material, and further improve battery cycle performance. In addition, the negative electrode composite material has a high reversible capacity based on inherent attributes of the silicon-containing material, the phosphorus-containing material, and the tin-containing material.

In some implementations of this application, a size of the nanoparticle in at least one direction is less than or equal to 2 nm. This helps suppress a volume change of the negative electrode composite material in the battery cycle process.

In some implementations of this application, the negative electrode composite material further includes a coating layer coated on a surface of the three-dimensional porous material. The coating layer includes a carbon coating layer and/or a fast ionic conductor coating layer, or a composite coating layer. The composite coating layer includes a carbon material and a fast ionic conductor material. A thickness of the coating layer is less than or equal to 20 nm. The carbon coating layer can improve electronic conductivity of the negative electrode composite material, and the fast ionic conductor coating layer can improve ion conductivity of the negative electrode composite material, thereby improving rate performance of a battery. The composite coating layer can improve both the electronic conductivity and the ion conductivity of the negative electrode composite material. In addition, the coating layer may also be used as physical isolation, to effectively reduce a risk of exposing the silicon-containing material, the phosphorus-containing material, and the tin-containing material to a surface of the negative electrode composite material, thereby improving interface stability of the negative electrode composite material and facilitating performance of the battery.

In some implementations of this application, the carbon coating layer is further formed in the hole. This can further improve electronic conductivity of the negative electrode composite material.

In some implementations of this application, the negative electrode composite material includes a doping element, and the doping element is at least one of N, P, or S. Doping the negative electrode composite material can improve electronic conductivity and stability of the negative electrode composite material.

In some implementations of this application, the nanoparticle includes the doping element. This helps improve the electronic conductivity and the stability of the negative electrode composite material.

In some implementations of this application, the three-dimensional porous material includes the doping element. This helps improve the electronic conductivity of the negative electrode composite material. In some specific embodiments of this application, each of the three-dimensional porous material and the nanoparticle includes the doping element. This can further improve comprehensive performance of the negative electrode composite material.

In some implementations of this application, a mass proportion of the doping element in the negative electrode composite material is less than 10%. In this way, both electronic conductivity and reversible capacity of the negative electrode composite material can be considered.

In some implementations of this application, a mass of the plurality of nanoparticles accounts for 30% to 80% of a total mass of the negative electrode composite material.

A third aspect of embodiments of this application provides a negative electrode plate, including a current collector and a negative electrode material layer disposed on a surface of the current collector. The negative electrode material layer includes the negative electrode composite material provided in the second aspect of embodiments of this application. Because the negative electrode composite material provided in embodiments of this application is used, the negative electrode plate has a low volume expansion rate after a battery cycle, and can provide a high reversible capacity, to provide a secondary battery having both high energy density and good cycle performance. The negative electrode plate may be a negative electrode plate used in a lithium secondary battery, or may be a negative electrode plate used in a sodium secondary battery.

A fourth aspect of embodiments of this application provides a secondary battery, including a negative electrode plate, a positive electrode plate, and an electrolyte located between the positive electrode plate and the negative electrode plate. Because the negative electrode plate provided in the third aspect of embodiments of this application is used, the secondary battery can have both high energy density and good cycle performance. The secondary battery may be a lithium secondary battery, or may be a sodium secondary battery.

In some implementations of this application, the secondary battery is a liquid battery.

In some implementations of this application, the secondary battery is a solid battery.

A fifth aspect of embodiments of this application provides a power consumption device, including the secondary battery provided in the fourth aspect of embodiments of this application. In some implementations of this application, the power consumption device includes but is not limited to a 3C electronic product, for example, a mobile phone, a notebook computer, a tablet computer, an uncrewed aerial vehicle, or a wearable electronic device. In some other implementations of this application, the power consumption device includes a power vehicle, for example, a new energy vehicle or an electric bicycle.

A sixth aspect of embodiments of this application provides an energy storage system, including the secondary battery provided in the fourth aspect of embodiments of this application. Because the secondary battery provided in embodiments of this application is used, the energy storage system may have high energy density.

In some implementations of this application, the energy storage system includes an energy storage device and a power converter that are electrically connected to each other, and the energy storage device includes an accommodation cavity and the secondary battery accommodated in the accommodation cavity.

### BRIEF DESCRIPTION OF DRAWINGS

FIG. 1 is a simplified diagram of a structure of a cross section of a three-dimensional porous material according to an embodiment of this application;
FIG. 2 is a simplified diagram of a structure of a cross section of a negative electrode composite material according to an embodiment of this application;
FIG. 3A is a simplified diagram of a structure of a cross section of a negative electrode composite material according to another embodiment of this application;
FIG. 3B is a simplified diagram of a structure of a cross section of a negative electrode composite material according to still another embodiment of this application;
FIG. 4 shows an X-ray diffraction (X-Ray Diffraction, XRD) spectrum of a negative electrode composite material SC1 and a comparative negative electrode composite material DSC2 according to an embodiment of this application;
FIG. 5 shows a scanning electron microscope (Scanning Electron Microscope, SEM) photo of a negative electrode composite material SC1 and a diagram of corresponding silicon element distribution measured via an energy dispersive spectrometer (Energy Dispersive Spectrometer, EDS) according to an embodiment of this application;
FIG. 6 shows an SEM photo of a comparative negative electrode composite material DSC2 and a diagram of corresponding EDS silicon element distribution; and
FIG. 7 is a transmission electron microscope (Transmission Electron Microscope, TEM) photo of a negative electrode composite material SC1 according to an embodiment of this application.

Reference numerals: 1: three-dimensional porous material; 10: micro-hole; 11: first-type hole; 12: second-type hole; 20: third-type hole; 100: negative electrode composite material; 30: nanoparticle; and 40: coating layer.

### DESCRIPTION OF EMBODIMENTS

With innovation and replacement of electronic products, the market has an increasingly high requirement for energy density of batteries. Development of high-performance negative electrode materials such as silicon-based negative electrode materials, phosphorus-containing negative electrode materials, and tin-based negative electrode materials has become one of the key technical routes. However, volume change rates of the several high-performance electrode materials before and after active ion intercalation/deintercalation are extremely high. A lithium-ion battery with a silicon-based negative electrode is used as an example. A volume expansion rate of a silicon particle in a lithium intercalation/deintercalation process is as high as 300%, which easily results in rupture of negative electrode material particles, aggravates a battery side reaction (for example, thickening of a solid electrolyte interface film), results in an irreversible loss of active ions, and even results in cracking of a negative electrode plate. A negative electrode material layer is peeled off from a current collector, which severely affects battery cycle performance.

A silicon negative electrode material as an example. To suppress expansion of the silicon negative electrode material in a battery cycle process. A silicon-containing active substance (for example, pure silicon) is usually deposited in holes of a three-dimensional porous material in the industry. A vapor deposition process is usually used for preparation. Preparation specifically includes: placing the three-dimensional porous material in a silane gas, and adsorbing silane in the holes and depositing silicon particles, to obtain a composite negative electrode material. However, in the conventional technology, the three-dimensional porous material has wide aperture distribution, which affects adsorption and deposition of silane in the holes. In addition, particle size distribution of the silicon particles in the finally obtained composite negative electrode material is correspondingly wide. As a result, a large quantity of silicon particles whose particle sizes are greatly different greatly differ in volume expansion effect in the battery cycle process, the three-dimensional porous material has limited suppression effect on expansion of the silicon particles, and the composite negative electrode material particles have non-uniform mechanical stress distribution, and still have a high risk of rupture in the charge/discharge cycle process, affecting battery cycle performance. However, growth and final particle size distribution of the silicon particles in the composite negative electrode material are obviously affected by aperture distribution of the three-dimensional porous material. Therefore, providing a three-dimensional porous material with a special aperture distribution design is one of keys to resolving the foregoing technical problems.

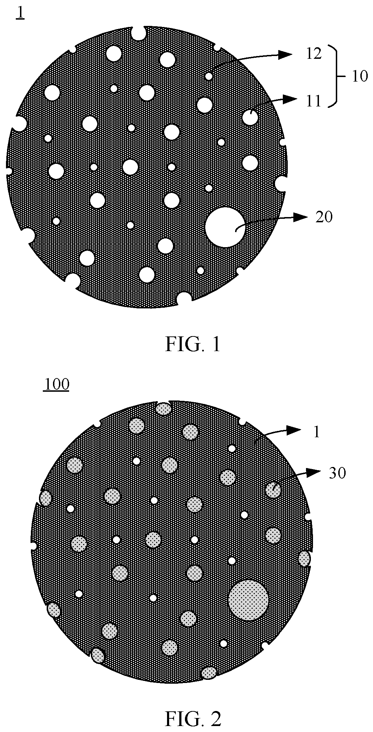

In view of this, for ease of description, in the following, holes whose opening diameters are less than or equal to 2 nm are collectively referred to as "micro-holes", holes whose opening diameters range from 1 nm to 2 nm are collectively referred to as "first-type holes", and holes whose opening diameters are less than 1 nm are collectively referred to as "second-type holes". In other words, the micro-hole includes the first-type hole and the second-type hole. Holes whose opening diameters are greater than 5 nm are collectively referred to as "third-type holes". As shown in FIG. 1, an embodiment of this application provides a three-dimensional porous material 1. A total hole volume of the three-dimensional porous material 1 as used as a reference, a volume proportion of a hole (a micro-hole 10) whose opening diameter is less than or equal to 2 nm is greater than or equal to 70%, and a volume proportion of a hole (a first-type hole 11) whose opening diameter ranges from 1 nm to 2 nm is greater than or equal to 50%.

In this embodiment of this application, both the opening diameter and opening diameter distribution in the three-dimensional porous material 1 are determined through a gas adsorption and desorption test. Based on a principle (a closed hole cannot be measured) of the gas adsorption and desorption test, a measured opening diameter of each hole is specifically an opening diameter measured through the gas adsorption and desorption test, and may be considered as a "maximum transverse size of an opening of the hole". Specifically, the micro-hole 10 may be in a spherical shape, a spheroidal shape, a strip shape, an irregular shape, or the like. A gas used in the gas adsorption and desorption test may be but is not limited to nitrogen, carbon dioxide, argon, or the like.

Specifically, the three-dimensional porous material 1 is placed in a gas adsorption and desorption tester, for example, a nitrogen adsorption and desorption test. During the test, a degassing time is kept greater than or equal to 30 min, and a degassing temperature is greater than or equal to 100°C, to obtain an adsorption and desorption curve of the three-dimensional porous material 1, so as to obtain the opening diameter distribution in the three-dimensional porous material 1.

In some specific embodiments of this application, there may be a small quantity of closed holes (holes that the gas cannot enter, which are not shown in the figure) in the three-dimensional porous material 1. It should be noted that, in this embodiment of this application, a volume of the closed hole is not counted in the total hole volume of the three-dimensional porous material 1.

It may be understood that hole distribution in the three-dimensional porous material is complex. Generally, a solid substance is mainly prepared in the hole in a deposition manner. Deposition includes but is not limited to chemical vapor deposition and sputtering deposition. For a porous material, holes with different opening diameters have different adsorption capabilities on particles (for example, gas molecules, atoms, and ions). Under superposition effect of interaction potential energy between hole walls, the hole whose opening diameter is less than or equal to 2 nm has a strong adsorption capability on the particles, and has good threshold limiting effect, which is more conducive to limiting a particle size of a deposited substance in the hole, and is more conducive to limiting particle size distribution of the deposited substance. More importantly, the inventor finds that, the hole whose opening diameter ranges from 1 nm to 2 nm has a stronger adsorption capability on an active material particle (a particle, for example, silane, that can be used to form a positive electrode active material or a negative electrode active material) than a hole with another opening diameter, and has better threshold limiting effect on the deposited substance. In the three-dimensional porous material 1 provided in embodiments of this application, opening diameter distribution of holes is concentrated within a range less than or equal to 2 nm, and a sum of volume percentages of the first-type holes 11 (namely, holes whose opening diameters are 1 nm to 2 nm) is greater than or equal to 50%. The opening diameter distribution is narrow, and a proportion of an effective deposition hole is large (a proportion of a hole that can effectively adsorb particles and deposit the particles to form the deposited substance is large). In this way, adsorption and deposition efficiency of the active material particle in the three-dimensional porous material 1 and deposition utilization of the hole can be improved, and high active material deposition load of a composite material can be achieved. Particularly, when the deposited material is a high-performance electrode material, a specific capacity of the finally obtained composite material can be improved. In addition, the three-dimensional porous material 1 has good uniformity, and therefore can improve concentration of particle sizes of the active material finally deposited in the hole of the three-dimensional porous material 1. In addition, the three-dimensional porous material 1 has good limiting effect on the particle size of the deposited and generated active material, which is conducive to formation of extremely small nanoparticles. In this embodiment of this application, the extremely small nanoparticle is a "nanoparticle whose size in at least one dimension is less than or equal to 2 nm". Therefore, when the deposited and generated active material is the high-performance electrode material like a silicon-containing substance, a phosphorus-containing substance, or a tin-containing substance, the three-dimensional porous material 1 can better suppress volume expansion of the active material in a charge/discharge cycle process, and avoid rupture due to non-uniform mechanical stress distribution inside the three-dimensional porous material 1 caused by volume expansion of the active material.

In this embodiment of this application, the total hole volume of the three-dimensional porous material 1 is used as the reference, and a volume proportion of a plurality of micro-holes 10 may be but is not limited to 70%, 75%, 80%, 85%, 88%, 90%, 92%, 95%, 98%, 99%, or 100%. If a volume proportion of the micro-hole 10 is excessively low, a volume proportion of a hole whose opening diameter is greater than 2 nm increases. Subsequent adsorption and deposition of another material are affected, and particle size control of the active material is also affected. When the deposited and generated active material is the high-performance electrode material like the silicon-containing material, effect on the volume expansion of the active material in the charge/discharge cycle process is still limited.

In this embodiment of this application, the total hole volume of the three-dimensional porous material 1 is used as the reference, and a volume proportion of a plurality of first-type holes 11 may be but is not limited to 50%, 52%, 55%, 58%, 60%, 62%, 65%, 68%, 70%, 72%, 75%, 80%, 85%, 90%, or 95%. If the volume proportion of the micro-holes 10 is greater than or equal to 70%, but the volume proportion of the first-type holes 11 is excessively low, it is difficult to effectively deposit a large quantity of holes subsequently. When the active material generated through deposition is the high-performance electrode material like the silicon-containing material, the specific capacity of the finally obtained composite material is excessively low.

In some implementations of this application, the total hole volume of the three-dimensional porous material 1 is used as the reference, and the volume proportion of the plurality of micro-holes 10 is greater than or equal to 85%. In some specific implementations, the volume proportion of the plurality of micro-holes 10 is greater than or equal to 87%, for example, 87% to 92%. This further increases the volume proportion of the micro-hole 10 in the three-dimensional porous material 1, and reduces the volume proportion of the hole whose opening diameter is greater than 2 nm. The three-dimensional porous material 1 has better uniformity, thereby increasing a probability that the deposited and generated active material is the extremely small nanoparticle. When the deposited and generated active material is the high-performance electrode material like the silicon-containing material, a volume expansion rate of the final composite material in a battery cycle process can be further reduced, non-uniform mechanical stress distribution inside the final composite material is reduced, and a risk of rupture of the composite material can be further reduced.

In some implementations of this application, the total hole volume of the three-dimensional porous material 1 is used as the reference, and a volume proportion of a plurality of second-type holes 12 is less than or equal to 40%. It is difficult for the hole whose opening diameter is less than 1 nm to adsorb a particle (for example, a silane gas molecule). When the proportion of the micro-holes 10 is high, the volume proportion of the second-type holes 12 is controlled to be less than or equal to 40%. This can increase a proportion of the effective deposition hole, and help increase a mass proportion of the deposited active material in the finally obtained composite material. In addition, when the second-type holes 12 exist in the three-dimensional porous material 1, there is a high probability that the second-type holes 12 exist as "empty holes" in the final composite material. In other words, because adsorption is difficult, a few of generated active materials with an extremely small particle size are finally deposited in the second-type holes 12, and the second-type holes 12 are left to form the "empty holes". Therefore, when the deposited active material is the high-performance negative electrode material such as the silicon-containing material, the second-type holes 12 may be used as buffer space for expansion of the high-performance electrode material in another hole. This can reduce an overall expansion rate of the composite material. Specifically, the volume proportion of the plurality of second-type holes 12 may be 40%, 38%, 36%, 35%, 32%, 30%, 25%, 22%, 20%, 15%, 10%, 5%, or 1%.

In some implementations of this application, the total hole volume of the three-dimensional porous material 1 is used as the reference, and the volume proportion of the plurality of second-type holes 12 is less than or equal to 38%, for example, 34% to 38%. In this way, the mass proportion of the deposited substance in the composite material can be further increased while specific expansion buffer space is reserved in the final composite material.

In some implementations of this application, the total hole volume of the three-dimensional porous material 1 is used as the reference, and a volume proportion of a plurality of third-type holes 20 is less than 1% (a volume proportion of the hole whose opening diameter is greater than 5 nm is less than 1%). In a process of preparing the three-dimensional porous material 1, the third-type hole 20 whose opening diameter is greater than 5 nm may be formed. The third-type hole 20 has a slightly weaker particle adsorption capability than the micro-hole 10, and has slightly weak limiting effect on the particle size of the deposited and generated negative electrode active material. The volume proportion of the third-type holes 20 is controlled to be less than 1%. This can reduce a probability of occurrence of an active material with a large particle size in the final composite material, and further improve threshold limiting effect of the three-dimensional porous material 1 on the deposited substance. When the deposited substance is the high-performance electrode material like the silicon-containing material, the expansion rate of the composite material in the charge/discharge cycle process can be further reduced, and non-uniform mechanical stress distribution inside the composite material can be further improved. Specifically, the volume proportion of the plurality of third-type holes 20 is less than or equal to 0.7%, for example, 0.5% to 0.7%.

In some implementations of this application, the total hole volume of the three-dimensional porous material 1 is greater than 0.5 cm³/g. In this embodiment of this application, when the volume proportion of the micro-hole 10 and the volume proportion of the first-type hole 11 in the three-dimensional porous material 1 are limited, the total hole volume is controlled to be greater than 0.5 cm³/g, so that the three-dimensional porous material 1 can have an appropriate quantity of effective deposition holes, to provide a composite material with better comprehensive performance. Specifically, the total hole volume of the three-dimensional porous material 1 may be but is not limited to 0.55 cm³/g, 0.60 cm³/g, 0.65 cm³/g, 0.70 cm³/g, 0.75 cm³/g, 0.80 cm³/g, 0.85 cm³/g, or 0.90 cm³/g. Further, the total hole volume of the three-dimensional porous material 1 is greater than 0.80 cm³/g, for example, 0.80 cm³/g to 0.90 cm³/g. In this embodiment of this application, the total hole volume of the three-dimensional porous material 1 is also tested and determined through the gas adsorption and desorption test.

In some implementations of this application, D50 of the three-dimensional porous material 1 ranges from 2 µm to 15 µm. In some specific embodiments, D50 of the three-dimensional porous material 1 ranges from 7 µm to 8 µm. Specifically, D50 of the three-dimensional porous material 1 may be but is not limited to 2 µm, 3 µm, 4 µm, 5 µm, 6 µm, 7 µm, 8 µm, 9 µm, 10 µm, 11 µm, 12 µm, 13 µm, 14 µm, or 15 µm. When the three-dimensional porous material 1 is used to provide a negative electrode composite material, and when D50 of the negative electrode composite material falls within the range, a length of an active ion intercalation/deintercalation path may be controlled within an appropriate range, which facilitates electrochemical performance of a battery. In this embodiment of this application, D50 is a particle size corresponding to an accumulated particle size distribution percentage of the three-dimensional porous material 1 reaching 50%, and D50 of the three-dimensional porous material 1 is tested via a laser particle size analyzer.

In some implementations of this application, a material of the three-dimensional porous material 1 includes at least one of conductive carbon, conductive ceramic, or metal. A person skilled in the art may make a selection based on an application requirement.

In some implementations of this application, the material of the three-dimensional porous material 1 is conductive carbon. In some specific embodiments, the material of the three-dimensional porous material 1 is amorphous carbon. In this case, true density of the three-dimensional porous material 1 ranges from 1.0 g/cc to 2.3 g/cc. In this embodiment of this application, the true density of the three-dimensional porous material 1 is tested by using a gas volumetric method. In addition, in some cases, the three-dimensional porous material 1 has a closed hole. In this case, limiting the true density of the three-dimensional porous material 1 is also limiting a volume proportion of the closed hole in the three-dimensional porous material 1 within an appropriate range to some extent. Specifically, the true density of the three-dimensional porous material 1 may be but is not limited to 1.0 g/cc, 1.2 g/cc, 1.5 g/cc, 1.8 g/cc, 2.0 g/cc, 2.1 g/cc, 2.2 g/cc, or 2.3 g/cc.

In some implementations of this application, the material of the three-dimensional porous material 1 is conductive carbon. Further, the material of the three-dimensional porous material 1 is amorphous carbon. Considering a preparation process and a raw material for preparing the three-dimensional porous material 1, the three-dimensional porous material 1 (namely, the conductive carbon) further includes some heteroatoms, for example, oxygen, hydrogen, nitrogen, and sulfur. Carbon content of the three-dimensional porous material 1 is greater than 90 wt%. Specifically, the carbon content of the three-dimensional porous material 1 may be but is not limited to 91 wt%, 92 wt%, 95 wt%, or 98 wt%. The carbon content of the three-dimensional porous material 1 may be determined via a carbon-sulfur analyzer.

Correspondingly, in some implementations of this application, preparation of the three-dimensional porous material 1 may include: providing a substrate material, and performing pore formation on the substrate material to obtain the three-dimensional porous material 1 provided in embodiments of this application. The substrate material includes but is not limited to a carbon precursor, a ceramic precursor, and a metal precursor.

In some implementations of this application, the substrate material is a carbon precursor. In this case, preparation of the three-dimensional porous material 1 may include the following step:
S01: Place the carbon precursor in a reaction chamber, perform heat preservation at a first temperature for a first time, cool to a room temperature, and then sequentially perform washing, drying, and crushing, to obtain the three-dimensional porous material 1. The preparation method has simple steps and high process reliability, and can implement large-scale industrial production. In some specific embodiments of this application, a material obtained after heat preservation for the first time is naturally cooled to the room temperature.

In some implementations of this application, the carbon precursor includes but is not limited to at least one of coke, a biomass carbon raw material, or a chemical organic polymer material. The coke includes but is not limited to coal coke or petroleum coke. The biomass carbon raw material includes but is not limited to at least one of a coconut shell, moso bamboo, an apricot shell, starch, or lignin. The organic polymer material includes but is not limited to at least one of phenolic resin, epoxy resin, polyethylene, polycarbonate, polyphenylene ether, or rubber.

In some implementations of this application, when the carbon precursor is coke, preparation further includes: mixing the coke with an alkaline activator, and then performing heat preservation at the first temperature. The alkaline activator includes but is not limited to at least one of sodium hydroxide, potassium hydroxide, or potassium carbonate.

In some specific embodiments of this application, the carbon precursor is the coke. In this case, the first temperature is 500°C to 1200°C, and the first time is 1 h to 48 h. Specifically, the first temperature may be but is not limited to 500°C, 550°C, 600°C, 650°C, 700°C, 750°C, 800°C, 850°C, 900°C, 950°C, 1000°C, 1050°C, 1100°C, 1150°C, or 1200°C. Specifically, the first time may be but is not limited to 1 h, 2 h, 5 h, 8 h, 10 h, 12 h, 15 h, 18 h, 20 h, 22 h, 25 h, 28 h, 30 h, 32 h, 35 h, 38 h, 40 h, 42 h, 45 h, or 48 h. Specifically, the coke and the alkaline activator are mixed at a mass ratio of 1:(1-20), and heat preservation is performed at 500°C to 1200°C for 1 h to 48 h. In some specific embodiments, the coke and the alkaline activator are mixed at a mass ratio of 1:(2-5), and heat preservation is performed at 500°C to 1200°C for 1 h to 48 h. This is more conducive to regulating the opening diameter and the opening diameter distribution in the three-dimensional porous material 1. Specifically, the mass ratio of the coke to the activator may be 1:1, 1:2, 1:3, 1:4, 1:5, 1:8, 1:10, 1:12, 1:15, 1:18, or 1:20.

In some specific implementations of this application, the carbon precursor is at least one of a biomass carbon raw material or an organic polymer material. In this case, in step S01, the first temperature is 500°C to 1200°C, and the first time is 0.5 h to 5 h. In addition, before heat preservation is performed at the first temperature, preparation further includes: performing carbonization on the biomass carbon raw material and/or the organic polymer material. When heat preservation is performed at the first temperature, preparation further includes: introducing an activation additive in the reaction chamber, where the activation additive includes but is not limited to at least one of water vapor, carbon dioxide, or a water gas. Specifically, when the carbon precursor is the biomass carbon raw material and/or the organic polymer material, the first temperature is but not limited to 500°C, 550°C, 600°C, 650°C, 700°C, 750°C, 800°C, 850°C, 900°C, 950°C, 1000°C, 1050°C, 1100°C, 1150°C, or 1200°C. The first heat preservation time may be but is not limited to 0.5 h, 1.0 h, 1.5 h, 2.0 h, 2.5 h, 3.0 h, 3.5 h, 4.0 h, 4.5 h, or 5.0 h.

In some specific embodiments, step S01 includes: placing the biomass carbon raw material and/or the organic polymer material in the reaction chamber, performing heat preservation at 300°C to 1000°C for 0.5 h to 10 h, so that the biomass carbon raw material and/or the organic polymer material are carbonized, then introducing the activation additive in the reaction chamber, and performing heat preservation at 500°C to 1200°C for 0.5 h to 5 h, to form holes on the carbonized biomass carbon raw material and/or the carbonized organic polymer material, and obtain the three-dimensional porous material 1 after cooling, drying, and crushing. When the activation additive is introduced in the reaction chamber, a gas flow rate of the activation additive ranges from 1 mL/min to 20 mL/min. Specifically, the gas flow rate of the activation additive may be but is not limited to 1 mL/min, 2 mL/min, 3 mL/min, 5 mL/min, 8 mL/min, 10 mL/min, 12 mL/min, 15 mL/min, 18 mL/min, or 20 mL/min.

In some specific embodiments of this application, when the carbon precursor is an organic polymer material like thermosetting phenolic resin, before carbonization, preparation further includes: crosslinking and curing the carbon precursor. For example, thermosetting phenolic resin is mixed with phenol formaldehyde, and heat preservation is performed at 50°C to 200°C, so that the thermosetting phenolic resin is cured, thereby facilitating subsequent carbonization. A person of ordinary skill in the art may select a type of the carbon precursor of the three-dimensional porous material 1 based on an actual requirement, and select a proper preparation process for the selected carbon precursor.

In some implementations of this application, preparation further includes step S02: Perform, in a protective atmosphere at a second temperature, heat preservation on a product obtained after crushing in step S01, to obtain the three-dimensional porous material 1, where the second temperature ranges from 400°C to 2000°C. In this way, impurity functional groups (for example, hydroxyl, carboxyl, oxygen atoms, and nitrogen atoms) in the three-dimensional porous material 1 can be removed. This can increase carbon content of the three-dimensional porous material 1, and prevents the impurity functional group from affecting adsorption and deposition of particles in an application process of the three-dimensional porous material 1. Specifically, the second temperature may be but is not limited to 400°C, 500°C, 800°C, 1000°C, 1200°C, 1500°C, 1800°C, or 2000°C.

As shown in FIG. 2, an embodiment of this application further provides a negative electrode composite material 100, including the three-dimensional porous material 1 provided in embodiments of this application and a plurality of nanoparticles 30 located in a hole of the three-dimensional porous material 1. A material of the nanoparticle 30 includes at least one of a silicon-containing material, a phosphorus-containing material, or a tin-containing material. In this embodiment of this application, the material of the nanoparticle 30 may be a crystalline phase, or may be an amorphous phase; and may be selected based on an actual application.

In this embodiment of this application, the negative electrode composite material 100 is preprocessed, so that the nanoparticles 30 are separated from the three-dimensional porous material 1, to obtain the three-dimensional porous material 1. Then, opening diameter distribution in the three-dimensional porous material 1 is tested and determined through a gas adsorption and desorption test. In this embodiment of this application, distribution of the nanoparticles 30 in the negative electrode composite material 100 may be tested and represented via an energy dispersive spectrometer (energy dispersive spectrometer, EDS).

Materials of the nanoparticles 30 are all high-performance electrode active materials, and the nanoparticles 30 can provide a high reversible capacity for a battery based on their inherent attributes. In addition, based on a special design of an opening diameter and opening diameter distribution of the three-dimensional porous material 1, an average particle size of the nanoparticles 30 is small. This can effectively reduce an expansion rate of the negative electrode composite material 100 in a charge/discharge cycle process. In addition, the plurality of nanoparticles 30 in the negative electrode composite material 100 are highly concentrated within a small particle size range (the negative electrode composite material 100 has good uniformity). This can improve uniformity of internal mechanical stress distribution of the negative electrode composite material 100 in a battery cycle process, reduce a risk of rupture of the negative electrode composite material 100, and further improve battery cycle performance.

In this embodiment of this application, the silicon-containing material includes but is not limited to pure silicon, silicon monoxide (SiOx), and a silicon-carbon complex. The phosphorus-containing material includes but is not limited to pure phosphorus. The tin-containing material includes but is not limited to pure tin and a tin alloy.

In some implementations of this application, the nanoparticle 30 is located in a hole whose opening diameter is greater than or equal to 1 nm in the three-dimensional porous material 1. Due to deposition and adsorption characteristics of the three-dimensional porous material 1 provided in embodiments of this application, the nanoparticle 30 is more likely to be deposited in the hole whose opening diameter is greater than or equal to 1 nm. In addition, due to the characteristics, the negative electrode composite material 100 may also have an "empty hole" (a hole that does not include the nanoparticle 30). In this way, buffer space can be provided for expansion of the nanoparticle 30 in the negative electrode composite material 100. This reduces a volume change of the negative electrode composite material 100 in the battery cycle process, and facilitates final battery cycle performance. In some cases, the nanoparticle 30 may also exist in a hole (a second-type hole 12) whose opening diameter is less than 1 nm. In this case, there are a few of nanoparticles 30 with a small particle size in the second-type hole 12.

In some implementations of this application, a size of the nanoparticle 30 in at least one direction is less than or equal to 2 nm. This helps suppress a volume change of the negative electrode composite material 100 in the battery cycle process. Further, in some implementations, the particle size of the nanoparticle 30 is less than or equal to 2 nm.

In some implementations of this application, in the negative electrode composite material 100, a total hole volume of the three-dimensional porous material 1 is used as the reference, and a volume proportion of a plurality of micro-holes 10 is greater than or equal to 85%. This can reduce the average particle size of the nanoparticles 30 in the negative electrode composite material 100, improve particle size uniformity of the negative electrode composite material 100, further reduce an expansion rate of the negative electrode composite material 100 in the battery cycle process, and improve uniformity of the negative electrode composite material 100.

In some implementations of this application, in the negative electrode composite material 100, the total hole volume of the three-dimensional porous material 1 is used as the reference, and a volume proportion of a plurality of third-type holes 20 is less than 1%. This limits the proportion of the third-type holes 20, and helps reduce the average particle size of the nanoparticles 30, thereby optimizing electrochemical performance of the negative electrode composite material 100.

In some implementations of this application, in the negative electrode composite material 100, the total hole volume of the three-dimensional porous material 1 is used as the reference, and a volume proportion of a plurality of second-type holes 12 is less than or equal to 40%. This can increase a mass proportion of the nanoparticles 30 in the negative electrode composite material 100, can improve a reversible capacity of the negative electrode composite material 100, and can increase energy density of the battery.

In some implementations of this application, a mass of the plurality of nanoparticles 30 accounts for 30% to 80% of a total mass of the negative electrode composite material 100. In some specific implementations, the mass of the plurality of nanoparticles 30 accounts for 40% to 50% of the total mass of the negative electrode composite material 100. With reference to a special structure design of the negative electrode composite material 100 provided in embodiments of this application, the mass proportion of the nanoparticles 30 (namely, a high-performance electrode material) is controlled within the range, so that the negative electrode composite material 100 can have a high reversible capacity and a low expansion rate, to provide a battery having both high energy density and good cycle performance. Specifically, the mass of the nanoparticles 30 may account for 30%, 32%, 35%, 40%, 41%, 42%, 43%, 44%, 45%, 46%, 47%, 48%, 49%, 50%, 51%, 52%, 53%, 54%, 55%, 56%, 57%, 58%, 59%, 60%, 65%, 68%, 70%, 72%, 75%, 78%, or 80% of the total mass of the negative electrode composite material 100. In this embodiment of this application, the mass proportion of the plurality of nanoparticles 30 in the negative electrode composite material 100 may be tested via a thermogravimetric analysis (TGA) test, an X-ray fluorescence spectrometer (X-ray Fluorescence Spectrometer, XRF), or an energy dispersive spectrometer (Energy Dispersive Spectrometer, EDS).

In some implementations of this application, when the material of the three-dimensional porous material is amorphous carbon, and the nanoparticle 30 is doped or undoped pure silicon, true density of the negative electrode composite material 100 ranges from 1.85 g/cc to 2.30 g/cc. In this embodiment of this application, true density of the three-dimensional porous material is tested by using a gas volumetric method. In addition, in some cases, the negative electrode composite material 100 has a closed hole. In this case, limiting the true density of the negative electrode composite material 100 is also limiting a volume proportion of the closed hole in the negative electrode composite material 100 within an appropriate range to some extent. The true density of the negative electrode composite material 100 may be but is not limited to 1.50 g/cc, 1.55 g/cc, 1.60 g/cc, 1.65 g/cc, 1.70 g/cc, 1.75 g/cc, 1.80 g/cc, 1.85 g/cc, 1.88 g/cc, 1.89 g/cc, 1.90 g/cc, 1.91 g/cc, 1.92 g/cc, 1.93 g/cc, 1.94 g/cc, 1.95 g/cc, 2.00 g/cc, 2.05 g/cc, 2.05 g/cc, 2.10 g/cc, 2.15 g/cc, 2.20 g/cc, 2.25 g/cc, or 2.30 g/cc.

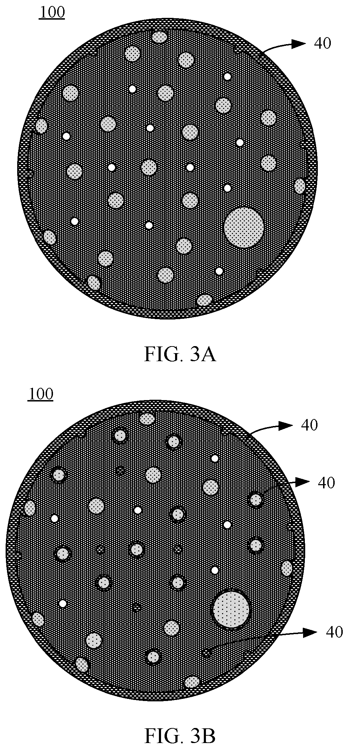

In some implementations of this application, as shown in FIG. 3A and FIG. 3B, the negative electrode composite material 100 further includes a coating layer 40 formed on a surface of the three-dimensional porous material 1. The coating layer 40 includes a carbon coating layer and/or a fast ionic conductor coating layer. Alternatively, the coating layer 40 is a composite coating layer, and a material of the composite coating layer includes a carbon material and a fast ionic conductor material. The carbon coating layer can improve electronic conductivity of the negative electrode composite material 100, and can contribute to a capacity, and the fast ionic conductor coating layer can improve ion conductivity of the negative electrode composite material 100, thereby improving rate performance of the battery and improving fast charging performance of the battery. The composite coating layer can improve both the electronic conductivity and the ion conductivity of the composite material. In addition, the coating layer 40 may be used as physical isolation, to effectively reduce a risk of exposing the silicon-containing material, the phosphorus-containing material, and the tin-containing material to the surface of the negative electrode composite material 100, and reduce a side reaction in the battery cycle process (for example, a side reaction between the silicon-containing material and an electrolyte solution in a liquid battery), thereby improving interface stability of the negative electrode composite material 100, and facilitating performance of the battery. In addition, the three-dimensional porous material including the nanoparticles 30 is equivalent to a "core" of the negative electrode composite material 100. In this case, the coating layer on the surface of the three-dimensional porous material can further suppress expansion of the "core", and further reduce the expansion rate of the negative electrode composite material 100 in the charge/discharge cycle process.

In some implementations of this application, the carbon coating layer and the fast ionic conductor coating layer are sequentially formed on the surface of the three-dimensional porous material 1, or the fast ionic conductor coating layer and the carbon coating layer are sequentially formed on the surface of the three-dimensional porous material 1. A person of ordinary skill in the art may make a selection based on an actual application.

In this embodiment of this application, a material of the fast ionic conductor coating layer (a fast ionic conductor material) may be any fast ionic conductor material well known in the art. For example, a fast ionic conductor material used in a lithium-ion battery includes but is not limited to Li₃N or Li₁₄Zn. For example, a fast ionic conductor used in a sodium-ion battery includes but is not limited to Na₃Zr₂Si₂PO₁₂ or Na₂O·Al₂O₃.

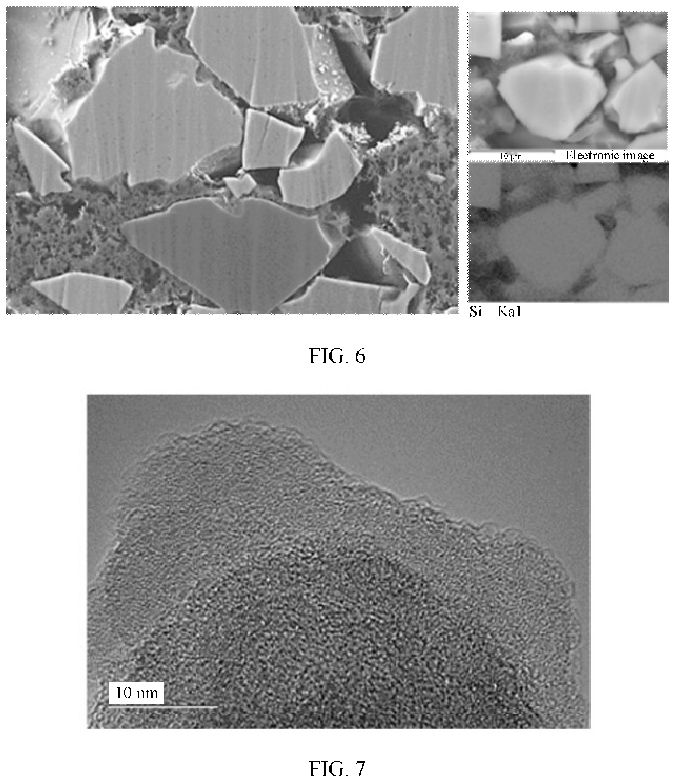

In some specific embodiments of this application, a material of the carbon coating layer (the carbon material) includes amorphous carbon. An amorphous carbon coating layer may be represented via a transmission electron microscope (Transmission Electron Microscope, TEM). FIG. 7 shows a TEM photo of the negative electrode composite material 100 according to an embodiment of this application. A clear amorphous carbon coating layer can be seen.

In some implementations of this application, a thickness of the coating layer 40 is less than or equal to 20 nm. The thickness of the coating layer is controlled within the range, so that physical isolation effect can be achieved, a diffusion path of ions or electrons in the negative electrode composite material 100 can be short, and good rate performance of the final battery can be ensured. Specifically, the thickness of the coating layer 40 may be but is not limited to 1 nm, 2 nm, 5 nm, 8 nm, 10 nm, 12 nm, 15 nm, 18 nm, or 20 nm.

In this embodiment of this application, the fast ionic conductor coating layer may be formed on a surface of the three-dimensional porous material 1 (namely, the negative electrode composite material 100) by using any process well known in the art, for example, a ball milling method.

In this embodiment of this application, the carbon coating layer may be formed on the surface of the three-dimensional porous material 1 (namely, the negative electrode composite material 100) by using any process well known in the art, for example, vapor deposition and a ball milling method.

In some implementations of this application, as shown in FIG. 3B, the carbon coating layer 40 is further formed in the holes of the three-dimensional porous material 1. That the carbon coating layer is formed in the holes of the three-dimensional porous material 1 may include the following cases: (1) The carbon coating layer is formed in a hole in which the nanoparticle 30 is deposited. In some specific embodiments, the carbon coating layer further completely or partially covers a surface of the nanoparticle 30. (2) The carbon coating layer is formed in a hole that does not contain the nanoparticle 30, and is attached to an inner wall of the hole of the three-dimensional porous material 1. In some specific embodiments, the carbon coating layer further partially or completely fills the hole. In this case, some gaps in the negative electrode composite material 100 may be reduced, and contact between the nanoparticles 30 and the three-dimensional porous material may be increased. This facilitates transmission of electrons and ions in the negative electrode composite material 100, can further suppress expansion of the nanoparticles 30, and can also contribute to a part of the reversible capacity.

In some implementations of this application, the carbon coating layer may be formed in the hole of the three-dimensional porous material 1 in a vapor deposition manner. It may be understood that the carbon coating layer may also be formed on the surface of the three-dimensional porous material by using a vapor deposition process. That is, in some implementations, the carbon coating layer is formed on the surface of the three-dimensional porous material 1 and in the hole of the three-dimensional porous material 1.

In some implementations of this application, the negative electrode composite material 100 includes a doping element, and the doping element is at least one of N, P, or S. Doping can improve the electrochemical performance of the negative electrode composite material 100.

In some implementations of this application, the nanoparticle 30 includes the doping element. Doping facilitates charge transmission and ion diffusion of the nanoparticle 30, and can further improve stability of the material of the nanoparticle 30, thereby improving electrochemical performance of the negative electrode composite material 100. Specifically, when the nanoparticle 30 is a silicon-containing material, the nanoparticle 30 includes but is not limited to N-doped pure silicon, P-doped pure silicon, or S-doped pure silicon. When the nanoparticle 30 is a phosphorus-containing material, the nanoparticle 30 includes but is not limited to pure phosphorus doped with an S atom. When the nanoparticle 30 is a tin-containing material, the nanoparticle 30 includes but is not limited to a Si-N alloy. The foregoing description is merely an example, and does not constitute a limitation on element composition of the negative electrode composite material 100 provided in embodiments of this application.

In some implementations of this application, the three-dimensional porous material 1 includes the doping element. This can improve at least conductivity of the negative electrode composite material 100. Specifically, when the material of the three-dimensional porous material 1 is conductive carbon, the doping element may be at least one of N, S, or P. Specifically, for example, the negative electrode composite material 100 may be an N-doped phosphorus/carbon composite material, and a phosphorus nanoparticle is located in N-doped three-dimensional porous carbon. The negative electrode composite material 100 may be a P-doped tin/carbon composite material, and a tin nanoparticle is located in P-doped three-dimensional porous carbon. The foregoing description is merely an example, and does not constitute a limitation on composition of the negative electrode composite material 100 provided in embodiments of this application. A person skilled in the art may make a selection based on an actual application.

In some implementations of this application, each of the three-dimensional porous material 1 and the nanoparticle 30 includes the doping element. For example, the negative electrode composite material 100 is an N-doped silicon/carbon composite material, where an N-doped pure silicon nanoparticle is located in the N-doped three-dimensional porous carbon. For another example, the negative electrode composite material 100 is an S-doped phosphorus/carbon composite material, where an S-doped pure silicon nanoparticle is located in S-doped three-dimensional porous carbon. The foregoing description is merely an example, and does not constitute a limitation on composition of the negative electrode composite material 100 provided in embodiments of this application. A person skilled in the art may make a selection based on an actual application.

In some implementations of this application, each of the three-dimensional porous material 1, the nanoparticle 30, and the carbon coating layer includes the doping element. A person of ordinary skill in the art may make a selection based on an application requirement.

In some implementations of this application, a mass proportion of the doping element in the negative electrode composite material 100 is less than 10%. In this way, both electronic conductivity and reversible capacity of the negative electrode composite material can be considered. Specifically, the mass proportion of the doping element in the negative electrode composite material 100 may be 0.1%, 0.5%, 1.0%, 2.0%, 3.0%, 4.0%, 5.0%, 6.0%, 7.0%, 8.0%, 9.0%, 9.5%, or 9.8%. In this embodiment of this application, a mass proportion of the doping element in the negative electrode composite material may be tested via the XRF or the EDS.

In some implementations of this application, D50 of the negative electrode composite material 100 ranges from 2 µm to 15 µm. In some specific embodiments, D50 of the negative electrode composite material 100 ranges from 7 µm to 8 µm. Specifically, D50 of the negative electrode composite material 100 may be but is not limited to 2 µm, 3 µm, 4 µm, 5 µm, 6 µm, 7 µm, 8 µm, 9 µm, 10 µm, 11 µm, 12 µm, 13 µm, 14 µm, or 15 µm. When D50 of the negative electrode composite material 100 falls within the range, a length of an active ion intercalation/deintercalation path may be controlled within an appropriate range, which facilitates the performance of the battery. In this embodiment of this application, D50 is a particle size corresponding to an accumulated particle size distribution percentage of the negative electrode composite material 100 reaching 50%, and D50 of the negative electrode composite material 100 is tested via a laser particle size analyzer.

In some implementations of this application, preparation of the negative electrode composite material 100 includes: S01: Deposit the nanoparticles in the three-dimensional porous material 1 provided in embodiments of this application. The preparation method has a simple process, strong controllability, and high production efficiency, and can implement large-scale industrial production. In addition, a mass proportion of the nanoparticles in the negative electrode composite material may be adjusted by adjusting a parameter in a deposition process. For example, the mass proportion of the nanoparticles may be adjusted by adjusting a heat preservation time. For another example, when the deposited raw material is in a gaseous state, the mass proportion of the nanoparticles may also be adjusted by adjusting a flow rate of the deposited raw material.

In some implementations of this application, deposition may be vapor deposition, or may be a process like sputtering deposition. A person skilled in the art may make a selection based on an actual application. A raw material of the nanoparticle may be selected based on the actual application.

It should be noted that, because the negative electrode composite material is prepared by depositing the nanoparticles 30 in the three-dimensional porous material 1, in some implementations of this application, a material of the nanoparticle (not shown in the figure) is further deposited on the surface of the three-dimensional porous material 1. Specifically, the material of the nanoparticle may be distributed on the surface of the three-dimensional porous material 1 in a form of particles in a dot shape, and/or partially coated on the surface of the three-dimensional porous material 1 in a form of a continuous phase.

The following briefly describes step S01 by using an example in which the material of the nanoparticles 30 is pure silicon and the material of the three-dimensional porous material 1 is amorphous carbon. The three-dimensional porous material 1 is placed in a reaction cavity, and a protective gas (for example, nitrogen) is introduced to exhaust air. The three-dimensional porous material 1 is preheated to 400°C to 500°C in a protective atmosphere, then, a silane gas is introduced in the reaction cavity, and heat preservation is performed for 2 h to 3 h, to deposit silicon nanoparticles. Then, a temperature is naturally reduced to a room temperature, and the material is discharged to obtain the negative electrode composite material 100. In some cases, after the temperature in the reaction cavity is reduced to the room temperature, a mixed gas of oxygen and nitrogen (oxygen content in the mixed gas is less than 10%) may be further introduced in the reaction cavity to perform pre-oxidation and passivation on the negative electrode composite material 100, so as to prevent sudden contact with air and avoid oxidation and exothermic combustion of the silicon nanoparticles, thereby improving stability of the negative electrode composite material. It should be noted that, in some specific embodiments, granular silicon is deposited on a surface of the obtained negative electrode composite material 100 (namely, the surface of the three-dimensional porous material 1), and/or a silicon layer is formed on a part of the surface of the negative electrode composite material 100.

In some implementations of this application, preparation of the negative electrode composite material 100 further includes step S02: Form the coating layer on the surface of the three-dimensional porous material in which the nanoparticles are deposited. Specifically, the coating layer may be formed, by using any process well known in the art, on the surface of the three-dimensional porous material in which the nanoparticles are deposited. Specifically, this method includes but is not limited to the ball milling method.

In some cases, the three-dimensional porous material 1 in which the nanoparticles 30 are deposited and the carbon material may be placed in a ball milling apparatus, to obtain the negative electrode composite material 100 having the carbon coating layer on the surface. In some other cases, the three-dimensional porous material 1 in which the nanoparticles 30 are deposited and the fast ionic conductor material may be placed in the ball milling apparatus, to obtain the negative electrode composite material 100 having the fast ionic conductor coating layer on the surface. In some other cases, the three-dimensional porous material 1 in which the nanoparticles are deposited, the carbon material, and the fast ionic conductor material may be placed in the ball milling apparatus, to obtain the negative electrode composite material 100 having the composite coating layer on the surface.

In some other implementations of this application, step S02 is forming the carbon coating layer both on the surface of the three-dimensional porous material 1 in which the nanoparticles 30 are deposited and in the hole. In some specific implementations, the three-dimensional porous material 1 in which the nanoparticles 30 are deposited is placed in the reaction cavity (a reaction cavity that does not contain air), a carbon source is introduced at 600°C to 800°C, and heat preservation is performed for 0.5 h to 4 h, so that the carbon material is deposited in the hole of the three-dimensional porous material 1 to form the carbon coating layer. Then, the reaction cavity is naturally cooled to a room temperature, to obtain the negative electrode composite material 100. The carbon source includes but is not limited to methane, ethane, acetylene, benzene, or amine.

In some implementations of this application, step S03 is further included: Perform element doping on a material obtained in step S01, or perform element doping on a material obtained in step S02. In other words, the three-dimensional porous material 1 in which the nanoparticles 30 are deposited is doped, or the three-dimensional porous material 1 in which the nanoparticles 30 are deposited and that has the coating layer 40 is doped. A doping process may be any known process in the art, and a person of ordinary skill in the art may make a selection based on an actual application.

In some specific embodiments of this application, preparation of the negative electrode composite material includes the following steps:
S01: Place a three-dimensional porous material 1 in a reaction cavity, introduce nitrogen to exhaust air in the reaction cavity, preheat the three-dimensional porous material to 400°C to 500°C in a nitrogen atmosphere, then introduce a silane gas in the reaction cavity, and perform heat preservation at 400°C to 500°C for 2 h to 3 h.
S02: Cut off the silane gas, increase a temperature to 600°C to 800°C, introduce a gas carbon source in the reaction cavity, and perform heat preservation at 600°C to 800°C for 0.5 h to 4 h.
S03: Replace the gas carbon source with nitrogen, perform heat preservation at 600°C to 800°C for 0.5 h to 2 h, naturally cool to a room temperature, and discharge to obtain a silicon/carbon negative electrode composite material doped with an N element.

An embodiment of this application further provides a negative electrode plate, including a current collector and a negative electrode material layer disposed on a surface of the current collector. The negative electrode material layer includes the negative electrode composite material 100 provided in embodiments of this application. Because the negative electrode composite material 100 provided in embodiments of this application is used, the negative electrode plate has a low volume expansion rate after a battery cycle, and can provide a high reversible capacity, to provide a secondary battery having both high energy density and good cycle performance.

In this embodiment of this application, the current collector is selected from any known negative electrode current collector for a secondary battery in the art. This is not limited in this application.

In some implementations of this application, a negative electrode active material layer includes the negative electrode composite material, a binder, and an optional conductive agent. The binder may be selected from any known binder in the art. The conductive agent may be selected from any conductive agent in the art.

In some implementations of this application, the negative electrode active material layer may further include another negative electrode material commonly used in this field. In other words, a mixture of the negative electrode composite material provided in embodiments of this application and the another negative electrode material commonly used in this field is used as a negative electrode active material.

An embodiment of this application further provides a secondary battery, including a negative electrode plate, a positive electrode plate, and an electrolyte located between the positive electrode plate and the negative electrode plate. Because the negative electrode plate provided in embodiments of this application is used, the secondary battery can have both high energy density and good cycle performance.

In this embodiment of this application, the secondary battery may be a lithium-ion battery or may be a sodium-ion battery, but is not limited thereto.

In some implementations of this application, the secondary battery is a liquid battery, including a negative electrode plate, a positive electrode plate, and a separator and an electrolyte solution that are located between the positive electrode plate and the negative electrode plate.

In some implementations of this application, the secondary battery is a liquid battery, including a negative electrode plate, a positive electrode plate, and a solid electrolyte located between the positive electrode plate and the negative electrode plate.

In some other implementations of this application, the secondary battery is a semi-solid battery.

An embodiment of this application further provides a power consumption device, including the secondary battery provided in embodiments of this application. The power consumption device includes but is not limited to a 3C electronic product, for example, a mobile phone, a notebook computer, a tablet computer, an uncrewed aerial vehicle, or a wearable electronic device. The power consumption device may further include a power vehicle, for example, a new energy vehicle or an electric bicycle.

An embodiment of this application further provides an energy storage system, including the secondary battery provided in embodiments of this application. Because the secondary battery provided in embodiments of this application is used, the energy storage system may have high energy density.

In some implementations of this application, the energy storage system includes an energy storage device and a power converter that are electrically connected to each other. The energy storage device includes an accommodation cavity and the secondary battery accommodated in the accommodation cavity. The power converter is configured to: perform power conversion processing on a voltage and/or a current, and input a changed voltage and/or current to the energy storage device, so that the energy storage device can meet a power consumption requirement of the power consumption device.

The following describes technical solutions in embodiments of this application in detail by using a plurality of embodiments.

### Embodiment 1

A three-dimensional porous material obtained in this embodiment of this application is provided, where carbon content is greater than 90 wt%, a total hole volume is 0.87 cm³/g, the total hole volume of the three-dimensional porous material is used as a reference, a volume proportion of a micro-hole (hole whose opening diameter is less than or equal to 2 nm) is 91%, a volume proportion of a first-type hole (hole whose opening diameter is 1 nm to 2 nm) is 57%, a volume proportion of a second-type hole (hole whose opening diameter is less than 1 nm) is 34%, and a volume proportion of a third-type hole (hole whose opening diameter is greater than 5 nm) is 0.5%.

### Embodiment 2

A difference from the three-dimensional porous material in Embodiment 1 lies in that a total hole volume is 0.86 cm³/g, the total hole volume of the three-dimensional porous material is used as a reference, a volume proportion of a micro-hole (hole whose opening diameter is less than or equal to 2 nm) is 89%, a volume proportion of a first-type hole (hole whose opening diameter is 1 nm to 2 nm) is 51%, a volume proportion of a second-type hole (hole whose opening diameter is less than 1 nm) is 38%, and a volume proportion of a third-type hole (hole whose opening diameter is greater than 5 nm) is 0.6%.

### Embodiment 3

A difference from the three-dimensional porous material in Embodiment 1 lies in that a total hole volume is 0.84 cm³/g, the total hole volume of the three-dimensional porous material is used as a reference, a volume proportion of a micro-hole (hole whose opening diameter is less than or equal to 2 nm) is 87%, a volume proportion of a first-type hole (whose opening diameter is 1 nm to 2 nm) is 50%, a volume proportion of a second-type hole (whose opening diameter is less than 1 nm) is 37%, and a volume proportion of a third-type hole (hole whose opening diameter is greater than 5 nm) is 0.7%.

To highlight beneficial effect of embodiments of this application, the following comparative examples are set.

### Comparative example 1

A three-dimensional porous material is provided, where carbon content is greater than 90 wt%, a total hole volume is 0.85 cm³/g, the total hole volume of the three-dimensional porous material is used as a reference, a volume proportion of a micro-hole (hole whose opening diameter is less than or equal to 2 nm) is 86%, a volume proportion of a first-type hole (hole whose opening diameter is 1 nm to 2 nm) is 33%, a volume proportion of a second-type hole (hole whose opening diameter is less than 1 nm) is 53%, and a volume proportion of a third-type hole (hole whose opening diameter is greater than 5 nm) is 1.8%.

### Comparative example 2

A three-dimensional porous material is provided, where carbon content is greater than 90 wt%, a total hole volume is 0.86 cm³/g, the total hole volume of the three-dimensional porous material is used as a reference, a volume proportion of a micro-hole (hole whose opening diameter is less than or equal to 2 nm) is 74%, a volume proportion of a first-type hole (hole whose opening diameter is 1 nm to 2 nm) is 38%, a volume proportion of a second-type hole (hole whose opening diameter is less than 1 nm) is 36%, and a volume proportion of a third-type hole (hole whose opening diameter is greater than 5 nm) is 9.8%.

It should be noted that opening diameter distribution of the three-dimensional porous materials in the embodiments and the comparative examples are tested and determined through a nitrogen adsorption and desorption test: The three-dimensional porous materials in the embodiments and the comparative examples are placed in a gas adsorption and desorption tester, and are degassed at 200°C for 16 h to obtain the opening diameter distribution and calculate specific surface areas. Specific surface area results are summarized in Table 1. For ease of reading, the opening diameter distribution of the three-dimensional porous materials in the embodiments and the comparative examples also summarized in Table 1.

The carbon content of the three-dimensional porous materials in the embodiments and the comparative examples is tested via a carbon-sulfur analyzer.

### Depositing silicon nanoparticles in a three-dimensional porous material

Each of the three-dimensional porous materials provided in the embodiments and the comparative examples is placed in a rotary tube furnace, nitrogen is introduced for 1 h to exhaust air in the rotary tube furnace, the three-dimensional porous material is preheated to 420°C in a nitrogen atmosphere, then, a silane gas is introduced in the rotary tube furnace, and heat preservation is performed at 420°C for 2 h.

The rotary tube furnace is cooled to a room temperature, a mixed gas of oxygen and nitrogen is introduced in the rotary tube furnace, where oxygen content in the mixed gas is less than 10%, and a material is discharged after 30 minutes. Negative electrode composite materials prepared from the three-dimensional porous materials in the embodiments are respectively denoted as S1 to S3, and negative electrode composite materials prepared from the three-dimensional porous materials in the comparative embodiments are respectively denoted as DS1 and DS2.

### Preparing a negative electrode composite material having a carbon coating layer

Each of the three-dimensional porous materials provided in the embodiments and the comparative examples is placed in a rotary tube furnace, nitrogen is introduced for 1 h to exhaust air in the rotary tube furnace, the three-dimensional porous material is preheated to 420°C in a nitrogen atmosphere, then, a silane gas is introduced in the rotary tube furnace, and heat preservation is performed at 420°C for 2 h.

The silane gas is cut off, and a temperature is increased to 650°C. A gas carbon source is introduced in the rotary tube furnace, heat preservation is performed at 650°C for 3 h, the rotary tube furnace is naturally cooled to a room temperature, and a material is discharged. Negative electrode composite materials prepared from the three-dimensional porous materials in the embodiments are respectively denoted as SC1 to SC3, and negative electrode composite materials prepared from the three-dimensional porous materials in the comparative embodiments are respectively denoted as DSC1 and DSC2.

### Preparing an N-doped negative electrode composite material having a carbon coating layer

The three-dimensional porous material in Embodiment 1 is placed in a rotary tube furnace, nitrogen is introduced for 1 h to exhaust air in the rotary tube furnace, the three-dimensional porous material is preheated to 420°C in a nitrogen atmosphere, then, a silane gas is introduced in the rotary tube furnace, and heat preservation is performed at 420°C for 2 h.

The silane gas is cut off, and a temperature is increased to 650°C. A gas carbon source (specifically, methane) is introduced in the rotary tube furnace, heat preservation is performed at 650°C for 3 h, the rotary tube furnace is naturally cooled to a room temperature, and a material is discharged.

The temperature is kept unchanged, the methane is replaced with the nitrogen, heat preservation is performed for 0.5 h, and the rotary tube furnace is naturally cooled to the room temperature. A negative electrode composite material prepared from the three-dimensional porous material in Embodiment 1 is denoted as SCN1.

Preparing, by changing a deposition time of silane, a negative electrode composite material whose silicon content is different from that of SC1

### Example SC1-2

The three-dimensional porous material provided in Embodiment 1 is placed in a rotary tube furnace, nitrogen is introduced for 1 h to exhaust air in the rotary tube furnace, the three-dimensional porous material is preheated to 420°C in a nitrogen atmosphere, then, a silane gas is introduced in the rotary tube furnace, and heat preservation is performed at 420°C for 1.9 h.

The silane gas is cut off, and a temperature is increased to 650°C. A gas carbon source is introduced in the rotary tube furnace, heat preservation is performed at 650°C for 3 h, the rotary tube furnace is naturally cooled to a room temperature, and a material is discharged, to obtain a negative electrode composite material SC1-2.

### Example SC1-3

A difference from Example SC1-2 lies only in that a silane gas is introduced in a rotary tube furnace, and heat preservation is performed at 420°C for 1.8 h, to obtain a negative electrode composite material SC1-3.

### Structural parameter and electrochemical performance representation

### (1) Structural parameter representation

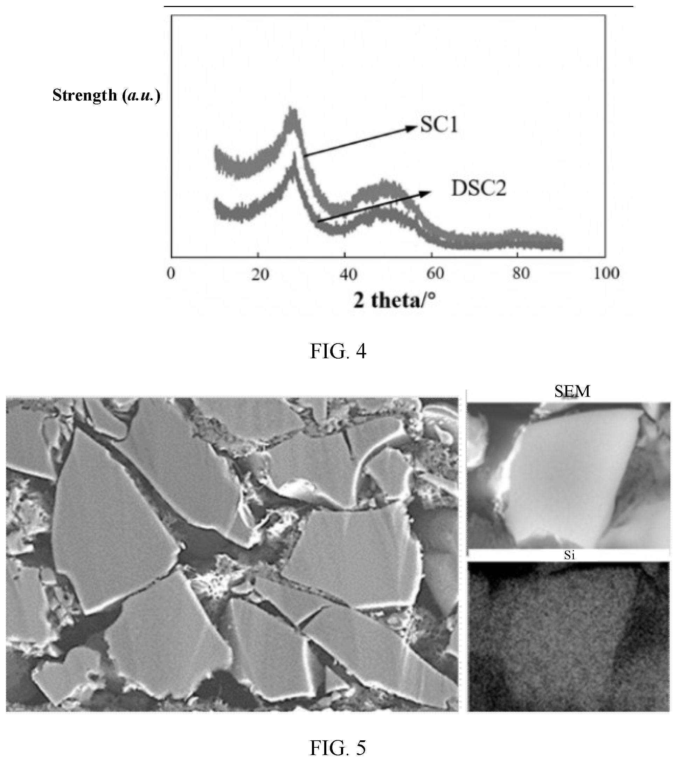

① A mass proportion of a silicon element in each of S1 to S3, DS1, DS2, SC1 to SC3, DSC1, DSC2, SCN1, and SC1-1 to SC1-3 in each corresponding negative electrode composite material is tested via an X-ray fluorescence scattering analyzer. Results are summarized in Table 2 to Table 5.
② D50 of each of S1 to S3, DS1, DS2, SC1 to SC3, DSC1, DSC2, and SCN1 is tested via a laser particle size analyzer. Results are summarized in Table 2 to Table 5.
③ True density of S1 to S3, DS1, DS2, SC1 to SC3, DSC1, DSC2, SCN1, and SC1-1 to SC1-3 is tested via a fully automated gas displacement method true density tester. Results are summarized in Table 2 to Table 5.
④ Powder resistivity of S1 to S3, DS1, DS2, SC1 to SC3, DSC1, DSC2, SCN1, and SC1-1 to SC1-3 is tested via a powder resistivity tester. Results are summarized in Table 2 to Table 5.
⑤ Specific surface areas of S1 to S3, DS1, DS2, SC1 to SC3, DSC1, DSC2, SCN1, and SC1-1 to SC1-3 are determined through a nitrogen adsorption and desorption test. Results are summarized in Table 2 to Table 5.
⑥ Content of a silicon element in each of S1 to S3, DS1, DS2, SC1 to SC3, DSC1, DSC2, SCN1, and SC1-1 to SC1-3 is determined through thermogravimetric analysis (TGA). Results are summarized in Table 2 to Table 5.
⑦ SC1 to SC3, DSC1, and DSC2 are observed via a TEM. A TEM photo of SC1 is shown in FIG. 7. A clear amorphous carbon coating layer can be seen.
⑧ The negative electrode composite material SC1 and the comparative negative electrode composite material DSC2 are tested via an X-ray diffractometer (X-Ray Diffraction, XRD) test. XRD spectra of SC1 and DSC2 are shown in FIG. 4. A clear amorphous carbon characteristic peak can be seen.
⑨ Morphologies of the negative electrode composite material SC1 and the comparative negative electrode composite material DSC2 and silicon element distribution at corresponding positions are observed via a scanning electron microscope (Scanning Electron Microscope, SEM)-energy dispersive spectrometer (Energy Dispersive Spectrometer, EDS). SEM photos of SC1 and DSC2 and diagrams of corresponding EDS silicon element distribution are summarized in FIG. 5 and FIG. 6.

### (2) Electrochemical performance representation

① A test battery of each negative electrode composite material is prepared.

Each of S1 to S3, DS1, DS2, SC1 to SC3, DSC1, DSC2, SCN1, and SC1-2 to SC1-3 is added to water with a conductive agent (specifically, Super P) and a binder (specifically, sodium carboxymethyl cellulose) at a mass ratio of 8:1:1, and is stirred evenly to obtain negative electrode slurry; the negative electrode slurry is coated on a negative electrode current collector (specifically, a copper foil), and is dried in vacuum at 110°C for 12 h; and then, roller pressing and slitting are performed, to obtain each negative electrode plate.

In an argon-protected glove box, a metal lithium sheet is used as a counter electrode, and the negative electrode plate, a separator (specifically, a commercial polyethylene separator), and the counter electrode are sequentially superimposed, packaged, and poured into an electrolyte solution, to obtain a 2032-type button battery, where the electrolyte solution is a 1 mol/L LiPF₆ solution, and an electrolyte solvent is ethylene carbonate and diethyl carbonate whose volume ratio is 1:1.

② Each prepared test battery is placed in an electrochemical test cabinet, and discharged at a constant current of 0.1 C to 0.005 V at 25°C, kept still for 5 minutes, further discharged at a constant current of 0.02 C to 0.005 V, kept still for 5 min, and then charged at a constant current of 0.1 C to 1 V, to perform a cycle test. A reversible capacity of the negative electrode composite material, initial coulombic efficiency, and a cycle capacity retention rate of the battery after 100 cycles are calculated. Results are summarized in Table 2 to Table 5.

③ At 25°C, an initial thickness of each negative electrode plate just prepared is tested. Then, the button battery prepared in step① is charged to 0.05 V, so that a negative electrode is in a full lithium state. The button battery is disassembled, a thickness of the negative electrode plate is tested, a thickness increment of the negative electrode plate is recorded, and an expansion rate of the negative electrode plate is calculated. Expansion rate of the negative electrode plate=thickness increment of the negative electrode plate/initial thickness of the negative electrode plate×100%. Results are summarized in Table 2 to Table 5.

**Table 1**

| Example | Embodiment 1 | Embodiment 2 | Embodiment 3 | Comparative example 1 | Comparative example 2 |
|---|---|---|---|---|---|
| Mass content of carbon | >90% | >90% | >90% | >90% | >90% |
| Total hole volume (cm³/g) | 0.87 | 0.86 | 0.84 | 0.85 | 0.86 |
| Specific surface area (m²/g) | 1978 | 1940 | 1932 | 1945 | 1796 |
| Volume proportion of a micro-hole | 91% | 89% | 87% | 86% | 74% |
| Volume proportion of a first-type hole | 57% | 51% | 50% | 33% | 38% |
| Volume proportion of a second-type hole | 34% | 38% | 37% | 53% | 36% |
| Volume proportion of a third-type hole | 99.5% | 99.4% | 99.3% | 98.2% | 90.2% |

**Table 2**

| Example | S1 | S2 | S3 | DS1 | DS2 |
|---|---|---|---|---|---|
| Mass content of silicon | 48.2% | 48% | 47.8% | 45.8% | 46.7% |
| Granularity D50 (µm) | 7.6 | 7.6 | 7.4 | 7.5 | 7.6 |
| Specific surface area (m²/g) | 7.8 | 8.2 | 7.6 | 8 | 9.2 |
| Powder conductivity (S/cm) | 0.01 | 0.012 | 0.013 | 0.018 | 0.016 |
| True density (g/cc) | 1.95 | 1.91 | 1.88 | 1.82 | 1.85 |
| Reversible capacity (mAh/g) | 1750 | 1730 | 1720 | 1600 | 1680 |
| Initial coulombic efficiency | 85% | 84% | 83% | 79% | 81% |
| Capacity retention rate after 100 cycles | 90% | 89% | 89% | 89% | 85% |
| Expansion rate of a negative electrode plate | 63% | 65% | 67% | 68% | 73% |

**Table 3**

| Example | SC1 | SC2 | SC3 | DSC1 | DSC2 |
|---|---|---|---|---|---|
| Mass content of silicon | 46.2% | 46.0% | 45.6% | 43.9% | 44.8% |
| Granularity D50 (µm) | 7.6 | 7.6 | 7.4 | 7.5 | 7.6 |
| Specific surface area (m²/g) | 2.8 | 1.8 | 2.6 | 4.2 | 4.8 |
| Powder conductivity (S/cm) | 1.1 | 1.2 | 1.3 | 1.8 | 1.6 |
| True density (g/cc) | 2.05 | 2.01 | 1.98 | 1.92 | 1.95 |
| Reversible capacity (mAh/g) | 1752 | 1748 | 1740 | 1622 | 1698 |
| Initial coulombic efficiency | 88% | 87% | 86% | 82% | 84% |
| Capacity retention rate after 100 cycles | 95% | 94% | 94% | 94% | 90% |
| Expansion rate of a negative electrode plate | 61% | 64% | 65% | 66% | 71% |

**Table 4**

| Example | SCN1 |
|---|---|
| Mass content of silicon | 46% |
| Granularity D50 (µm) | 7.6 |
| Specific surface area (m²/g) | 2.8 |
| Powder conductivity (S/cm) | 2.5 |
| True density (g/cc) | 2.05 |
| Reversible capacity (mAh/g) | 1758 |
| Initial coulombic efficiency | 88.5% |
| Capacity retention rate after 100 cycles | 98% |
| Expansion rate of a negative electrode plate | 61% |

**Table 5**

| Example | SC1 | SC1-2 | SC1-3 |
|---|---|---|---|
| Mass content of silicon | 46.2% | 44% | 41.6% |
| Granularity D50 (µm) | 7.6 | 7.6 | 7.6 |
| Specific surface area (m²/g) | 2.8 | 3.8 | 5.5 |
| Powder conductivity (S/cm) | 1.1 | 1.3 | 1.8 |
| True density (g/cc) | 2.05 | 1.93 | 1.87 |
| Reversible capacity (mAh/g) | 1752 | 1702 | 1656 |
| Initial coulombic efficiency | 88% | 86% | 84% |
| Capacity retention rate after 100 cycles | 95% | 96% | 97% |
| Expansion rate of a negative electrode plate | 61% | 56% | 52% |

It can be seen from data in Table 1 and Table 2 that, when the total hole volumes of the three-dimensional porous materials are similar, silicon content of each of the negative electrode composite materials S1 to S3 prepared from the three-dimensional porous material provided in embodiments of this application is significantly higher than that of DS1 and DS2 in the comparative examples, and the reversible capacity of each of the negative electrode composite materials S1 to S3 is significantly higher than those of DS1 and DS2 in the comparative examples. This indicates that the three-dimensional porous material in embodiments of this application has higher content of an effective deposition hole. In addition, because opening diameter distribution of the holes in the three-dimensional porous material provided in embodiments of this application is more uniform, the final negative electrode composite material can further exhibit a low expansion characteristic and good cycle performance when having a high reversible capacity.

With reference to data in Table 2 and Table 3, it can be found that carbon coating can greatly improve electron conductivity of the negative electrode composite material, improve cycle performance, further reduce an expansion rate of the negative electrode composite material, and slightly increase a reversible capacity. In addition, after carbon coating, the specific surface area of the negative electrode composite material is reduced greatly. It indicates that the carbon coating layer is further formed in the hole of the three-dimensional porous material.

Further, it can be seen from data in Table 3 and Table 4 that, N doping further improves the electronic conductivity and the reversible capacity of the negative electrode composite material, and further optimizes the cycle performance. It indicates that doping can further improve stability of the negative electrode composite material.

It can be easily seen from data in Table 5 that, when silicon content of the negative electrode composite material is adjusted, a change trend of the cycle performance is opposite to that of the reversible capacity, and the change trend of the cycle performance is opposite to that of the negative electrode expansion rate. A person of ordinary skill in the art may flexibly adjust the silicon content of the negative electrode composite material (namely, content of nanoparticles) based on an actual requirement.

The foregoing descriptions are example implementations of this application. It should be noted that a person of ordinary skill in the art can further make several improvements and modifications without departing from the principle of this application, and these improvements and modifications shall fall within the protection scope of this application.

## Claims

1. A three-dimensional porous material, wherein the three-dimensional porous material comprises a plurality of holes, a total hole volume of the three-dimensional porous material is used as a reference, a volume proportion of a hole whose opening diameter is less than or equal to 2 nm is greater than or equal to 70%, and a volume proportion of a hole whose opening diameter ranges from 1 nm to 2 nm is greater than or equal to 50%.

2. The three-dimensional porous material according to claim 1, wherein the total hole volume of the three-dimensional porous material is used as the reference, and the volume proportion of the hole whose opening diameter is less than or equal to 2 nm is greater than or equal to 85%.

3. The three-dimensional porous material according to claim 1 or 2, wherein the total hole volume of the three-dimensional porous material is used as the reference, and a volume proportion of a hole whose opening diameter is less than 1 nm is less than or equal to 40%.

4. The three-dimensional porous material according to claim 3, wherein the total hole volume of the three-dimensional porous material is used as the reference, and the volume proportion of the hole whose opening diameter is less than 1 nm is less than or equal to 38%.

5. The three-dimensional porous material according to any one of claims 1 to 4, wherein the total hole volume of the three-dimensional porous material is used as the reference, and a volume proportion of a hole whose opening diameter is greater than 5 nm is less than 1%.

6. The three-dimensional porous material according to any one of claims 1 to 5, wherein the total hole volume of the three-dimensional porous material is greater than 0.5 cm³/g.

7. The three-dimensional porous material according to any one of claims 1 to 6, wherein a material of the three-dimensional porous material comprises at least one of conductive carbon, conductive ceramic, or metal.

8. A negative electrode composite material, wherein the negative electrode composite material comprises the three-dimensional porous material according to any one of claims 1 to 7 and a plurality of nanoparticles located in the hole; and
a material of the nanoparticle comprises at least one of a silicon-containing material, a phosphorus-containing material, or a tin-containing material.

9. The negative electrode composite material according to claim 8, wherein a size of the nanoparticle in at least one direction is less than or equal to 2 nm.

10. The negative electrode composite material according to either claim 8 or 9, wherein the negative electrode composite material further comprises a coating layer formed on a surface of the three-dimensional porous material;
the coating layer comprises a carbon coating layer and/or a fast ionic conductor coating layer, or a composite coating layer, wherein a material of the composite coating layer comprises a carbon material and a fast ionic conductor material; and
a thickness of the coating layer is less than or equal to 20 nm.

11. The negative electrode composite material according to claim 10, wherein the carbon coating layer is further formed in the hole of the three-dimensional porous material.

12. The negative electrode composite material according to any one of claims 8 to 11, wherein the negative electrode composite material comprises a doping element, and the doping element is at least one of N, P, or S.

13. The negative electrode composite material according to claim 12, wherein the nanoparticle comprises the doping element.

14. The negative electrode composite material according to claim 12 or 13, wherein the three-dimensional porous material comprises the doping element.

15. The negative electrode composite material according to any one of claims 12 to 14, wherein a mass proportion of the doping element in the negative electrode composite material is less than 10%.

16. The negative electrode composite material according to any one of claims 8 to 15, wherein a mass of the plurality of nanoparticles accounts for 30% to 80% of a total mass of the negative electrode composite material.

17. A negative electrode plate, comprising a current collector and a negative electrode material layer disposed on a surface of the current collector, wherein the negative electrode material layer comprises the negative electrode composite material according to any one of claims 8 to 16.

18. A secondary battery, wherein the secondary battery comprises the negative electrode plate according to claim 17, a positive electrode plate, and an electrolyte located between the negative electrode plate and the positive electrode plate.

19. A power consumption device, wherein the power consumption device comprises the secondary battery according to claim 18.

20. An energy storage system, wherein the energy storage system comprises the secondary battery according to claim 18.
